# EUROPEAN PATENT APPLICATION

(11) **EP 1 533 724 A1**
(43) Date of publication of application: **25.05.2005**
(21) Application number: 03026472.5
(22) Date of filing: 20.11.2003
(51) Int. Cl.: G06F 17/60, H04L 9/32

(54) **Method and computer system for signing electronic contracts**

(71) Applicant: SAP Aktiengesellschaft, 69190 Walldorf (DE)
(72) Inventor: Gomez, Laurent, 06110 Le Cannet (FR); Hebert, Cedric, 06370 Mouans Sartoux (FR); Ulmer, Cédric, 13009 Marseille (FR)

(57) **Abstract**

Method and computer system for electronic contract management. An application server (900) receives (410) from a client device (910) a signature request for an electronic contract (100) in a secure database. The signature request indicates that the electronic contract (100) is to be signed by a first contractor and at least a second contractor. A transformer (920) transforms a compressed version (100-C) of the electronic contract (100) into a first encoded version (201) and a second encoded version (202). A first mobile device (901) generates a first signed version (201-S) from the first encoded version (201). A second mobile device (902) generates a second signed version (202-S) from the second encoded version (202). The application server (900) validates (440) the signatures of the first signed version (201-S) and the second signed version (202-S), and, in case the signatures are valid, notifies (450) the client device (910) that the electronic contract (100) has been signed by the first and the at least second of contractor.

## Description

### Field of the Invention

The present invention generally relates to electronic data processing, and more particularly, relates to methods, computer program products and systems for electronic contract management.

### Background of the Invention

Some jurisdictions already accept digital signatures for validly signing electronic contract documents between contractors by using electronic devices. For example, with Mobile e-Pay, a solution for mobile e-commerce services of Ericsson, one contractor is preparing an electronic contract for a financial transaction and one other contractor can sign the contract using a digital signature generated by a mobile device.

### Summary of the Invention

The present invention according to the independent claims provides a computer system a method and a computer program product to enable electronic contract management for scenarios where at least two of the contractors rely on mobile devices for signing an electronic contract document that is provided by a third party.

The signatures are automatically validated and the third party is notified when the contract has been signed by all contractors.

The aspects of the invention will be realized and attained by means of the elements and combinations particularly pointed out in the appended claims. Also, the described combination of the features of the invention is not be understood as a limitation, and all the features can be combined in other constellations without departing from the spirit of the invention. It is to be understood that both the foregoing general description and the following detailed description are exemplary and explanatory only and are not restrictive of the invention as described.

### Brief Description of the Drawings

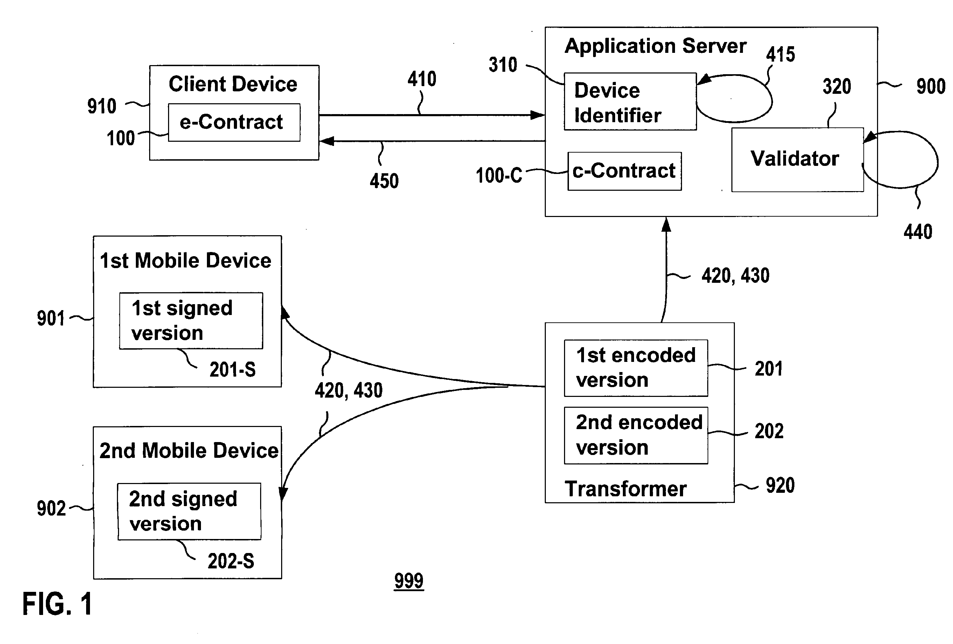

FIG. 1 is a simplified block diagram of a computer system for signing an electronic contract by multiple mobile contractors.

### Detailed Description of the Invention

FIG. 1 is a simplified block diagram of a computer system 999 for signing an electronic contract by multiple contractors.

The computer system 999 includes an application server 900 that receives 410 a signature request for an electronic contract 100 from a client device 910. For example, the signature request can be an HTTP request. The client device 910 can be a desktop computer, a laptop computer or any other device that is suitable to created an electronic contract, e.g., by using a text processor. For example, a notary or attorney creates an electronic rental contract that has to be signed by two different parties (contractors). The contract includes the names of the contractors.

The client device 910 can communicate with the application server 900 over a network. For further processing of the signature request the application server 900 may use a secure database that is operated behind a fire wall. The application server 900 and the secure database form a trusted environment and can implement a security server logic.

The signature request indicates that the electronic contract 100 is to be signed by a first contractor and at least a second contractor. Any larger number of contractors is possible. The contractors use mobile devices 901, 902 for signing the contract.

The application server 900 includes a device identifier 310 for identifying identification numbers of the mobile devices 901, 902 of the respective contractors. For example, the device identifier can be implemented by using an ID data structure storing the identification number of the mobile device used by a contractor together with the contactor's name in the secure database. In case the mobile devices are mobile phones the corresponding identification number are the phone numbers of the mobile phones. For other mobile device types other identification numbers (e.g., IP addresses) may be appropriate. The device identifier can extract the contractors' names from the electronic contract 100 and look up the corresponding identification numbers in the ID data structure. In response to the signature request the application server 900 further generates a compressed version 100-C of the electronic contract 100. For example, the compressed version 100-C can be a hash code of the electronic contract 100. The hash code can be encrypted with a private code the application server, which can only be decrypted with a corresponding public key. The application server 900 then sends the compressed version 100-C to a transformer 920 for transformation into a first encoded version 201 and a second encoded version 202. For example, the transformer 920 can be a SMS center and the first and second encoded versions 201, 202 are SMS messages comprising an identical hash code of the electronic contract 100. In case of encryption, the SMS center can receive the hash code and the encrypted hash code signed by the application server in the format of an HTTP request which is then transformed into corresponding SMS messages.

In another implementation the first and second encoded versions 201, 202 can be WML pages including WML scripts.

The transformer 920 forwards 420 the first and second encoded versions 201, 202 of the electronic contract 100 to the first and second mobile devices 901, 902, respectively by using the corresponding identification numbers from the device identifier 310.

The first and second contractors can then trigger the signatures of the first and second encoded versions by using the corresponding mobile device. For example, the first and second mobile devices 901, 902 can have corresponding SIM cards that interpret the SMS messages and prompt the contractors to sign the hash code that was generated by the application server. In response to the contactor action, the SIM cards compute the corresponding signatures. Theses signatures are then appended to the first and second encoded versions 201, 202, respectively, thus resulting in a first signed version 201-S and a second signed version 202-S.

For example, the mobile devices decrypt the encrypted hash code included in the encoded versions and compare it to the hash code after having applied the public key. The SIM card can compute the signature by checking if decrypted the hash code is correct and encrypting the hash code with the private key of the mobile device.

The mobile devices 901, 902 send back the signed versions 201-S, 202-S to the application server 900. Typically this is done by going though the transformer 920 for transformation of the SMS messages into application server protocol compatible formats (e.g., a http format). For example, the mobile devices send back the hash code that is encrypted with the private key of the mobile equipment including the corresponding identification number (e.g., mobile phone number or public key of the mobile device).

Once the application server 900 has received 430 the first and second signed versions 201-S, 202-S, the corresponding signatures are validated 440. For example, the application server 900 can include a validator component 320 having the functionality of a security server. In another implementation, the security server may be implemented outside the application server.

The validation 440 is performed within the secure database and compares whether the signatures received with the signed versions correspond to the signatures expected from the corresponding contractors.

In case the signatures are valid, the application server 900 notifies 450 the client device 910 that the electronic contract 100 has been signed by the first and the at least second contractor.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device or in a propagated signal, for execution by, or to control the operation of, data processing apparatus, e.g., a programmable processor, a computer, or multiple computers. An computer program for signing an electronic contract by multiple contractors through mobile devices can be written in any form of programming language, including compiled or interpreted languages, and it can be deployed in any form, including as a stand-alone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are at least one processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computer having a display device, e.g., a cathode ray tube (CRT) or liquid crystal display (LCD) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other.

## Claims

1. A computer implemented method for electronic contract management comprising the steps of:
receiving (410) from a client device a signature request for an electronic contract (100) to be signed by a first contractor using a first mobile device (901) and at least a second contractor using a second mobile device (902);
forwarding (420) in response to the signature request a first encoded version (201) of the electronic contract (100) to the first mobile device (901) and a second encoded version (202) of the electronic contract (100) to the second mobile device (902);
receiving (430) from the first mobile device (901) the first version signed (201-S) by the first contractor and from the second mobile device (902) the second version signed (202-S) by the second contractor;
validating (440) the signatures of the first signed version (201-S) and the second signed version (202-S); and
in case the signatures are valid, notifying (450) the client device (910) that the electronic contract (100) has been signed by the first and the at least second contractor.

2. The method of claim 1, comprising the further step:
identifying (415) identification numbers of the first mobile device (901) and the second mobile device (902).

3. The method of claim 2, wherein the identification numbers are phone numbers.

4. The method of claim 2 or 3, wherein the identifying step (415) is executed in a secure database.

5. The method of any one of the previous claims, wherein the forwarding step (420) further comprises:
sending a hash code of the electronic contract (100) to a transformer (920) for transformation into the first encoded version (201) and the second encoded version (202).

6. The method of claim 5, wherein the transformer (920) is a SMS center and the first and second encoded versions (201, 202) are SMS messages.

7. The method of claim 5, wherein and the first and second encoded versions (201, 202) are WML pages including WML scripts.

8. The method of any one of the previous claims, wherein the signature of the first signed version (201-S) is computed by a SIM-card of the first mobile device (901) and the signature of the second signed version (202-S) is computed by a SIM card of the second mobile device (902).

9. The method of any one of the previous claims, wherein the validating step (440) is performed in the secure database.

10. The method of any one of the previous claims, wherein the first and the second encoded versions (201, 202) are identical.

11. A computer system (999) for electronic contract management comprising:
an application server (900) for receiving (410) from a client device (910) a signature request for an electronic contract (100) in a secure database, the signature request indicating that the electronic contract (100) is to be signed by a first contractor and at least a second contractor;
a transformer (920) for transforming a compressed version (100-C) of the electronic contract (100) into a first encoded version (201) and a second encoded version (202);
a first mobile device (901) for generating a first signed version (201-S) from the first encoded version (201);
a second mobile device (902) for generating a second signed version (202-S) from the second encoded version (202);
the application server (900) for validating (440) the signatures of the first signed version (201-S) and the second signed version (202-S), and, in case the signatures are valid, for notifying (450) the client device (910) that the electronic contract (100) has been signed by the first and the at least second of contractor.

12. The computer system of claim 11, where the application server (900) comprises:
a device identifier (310) for identifying identification numbers of the mobile devices (901, 902) of the respective contractors.

13. The computer system of claim 11 or 12, where the application server (900) comprises:
a validator (320) for validating (440) the signatures of the first signed version (201-S) and the second signed version (202-S).

14. The computer system of any one of the claim 11 to 13, where the transformer (920) is a SMS center.

15. The computer system of any one of the claim 11 to 14, where the first encoded version (201) and the second encoded version (202) are SMS messages comprising an identical hash code of the electronic contract (100).

16. The computer system of any one of the claim 11 to 15, where the first mobile device (901) and the second mobile device (902) have corresponding SIM cards for computing the signatures for the first encoded version (201) and the second encoded version (202), respectively.

17. A computer program product for electronic contract management comprising a plurality of instructions that when loaded into a memory of a computer system (999) cause at least one processor of the computer system (999) to execute the steps of any one of the claims 1 to 10.
